# EUROPÄISCHE PATENTSCHRIFT

(11) **EP 3 200 002 B1**
(45) Veröffentlichungstag und Bekanntmachung des Hinweises auf die Patenterteilung: **27.04.2022**
(21) Anmeldenummer: 16153001.9
(22) Anmeldetag: 27.01.2016
(51) Int. Cl.: G02B 21/00, G02B 27/58

(54) **VERFAHREN ZUM VERWENDEN EINES HOCHAUFLÖSENDEN LASER-SCANNING-MIKROSKOPS UND HOCHAUFLÖSENDES LASER-SCANNING-MIKROSKOP**
METHOD FOR USING A HIGH RESOLUTION LASER SCANNING MICROSCOPE AND HIGH RESOLUTION LASER SCANNING MICROSCOPE
PROCEDE D'UTILISATION D'UN MICROSCOPE A BALAYAGE LASER HAUTE RESOLUTION ET MICROSCOPE A BALAYAGE LASER HAUTE RESOLUTION

(43) Veröffentlichungstag der Anmeldung: 02.08.2017
(73) Patentinhaber: Abberior Instruments GmbH, 37077 Göttingen (DE)
(72) Erfinder: Harke, Benjamin, 37083 Göttingen (DE); Reuss, Matthias, 37083 Göttingen (DE); Kastrup, Lars, 37073 Göttingen (DE)
(74) Vertreter: REHBERG HÜPPE + PARTNER

(56) Entgegenhaltungen:
- WO-A1-2008/098144
- WO-A1-2013/067643
- US-A1- 2015 211 986
- Yong Wu ET AL: "Resonant-scanning dual-color STED microscopy with ultrafast photon counting: A concise guide", Methods, vol. 88, 1 October 2015 (2015-10-01), pages 48-56, XP055342628, NL ISSN: 1046-2023, DOI: 10.1016/j.ymeth.2015.06.019

## Beschreibung

### TECHNISCHES GEBIET DER ERFINDUNG

Die Erfindung bezieht sich auf ein Verfahren zum Verwenden eines hochauflösenden Laser-Scanning-Mikroskops mit einem Objektivanschluss und Strahlformungsmitteln. Weiterhin bezieht sich die Erfindung auf ein hochauflösendes Laser-Scanning-Mikroskop mit einem Objektivanschluss und Strahlformungsmitteln. Bei dem Verfahren und dem Laser-Scanning-Mikroskop formen die Strahlformungsmittel einen in eine Rückapertur eines an den Objektivanschluss angeschlossenen Objektivs gerichteten Fluoreszenzverhinderungslichtstrahl zumindest hinsichtlich seiner Polarisation, um im Fokus des Objektivs ein von Intensitätsmaxima begrenztes Intensitätsminimum auszubilden.

### STAND DER TECHNIK

Bei hochauflösenden Laser-Scanning-Mikroskopen, die ihre räumliche Hochauflösung mit Hilfe eines Fluoreszenzverhinderungslichtstrahls erreichen, wird der jeweilige Messbereich, aus dem aus einer Probe emittiertes Fluoreszenzlicht registriert wird, gegenüber einem beugungsbegrenzten, d. h. als solchem nicht weiter einengbaren Spot eines fokussierten Fluoreszenzanregungslichtstrahls, dadurch verkleinert, dass dieser Spot mit einer Intensitätsverteilung von Fluoreszenzverhinderungslicht überlagert wird, die ein von Intensitätsmaxima begrenztes Intensitätsminimum aufweist. Wenn die Intensität des Fluoreszenzverhinderungslichts in den Intensitätsmaxima so groß ist, dass es die Fluoreszenzverhinderung bis zur Sättigung treibt, während die Intensität des Fluoreszenzverhinderungslichts in dem Intensitätsminimum so klein bleibt, dass es Emission von Fluoreszenzlicht nicht verhindert, stammt das registrierte Fluoreszenzlicht ausschließlich aus dem Bereich des Intensitätsminimums. Wenn das Intensitätsminimum eine durch Interferenz erzeugte Nullstelle der Intensitätsverteilung des Fluoreszenzverhinderungslichts ist, können die Abmessungen des Bereichs des Intensitätsminimums, aus dem noch Fluoreszenzlicht registriert wird, durch Erhöhen der Intensität des Fluoreszenzverhinderungslichts bis weit unter die Beugungsgrenze reduziert werden. Dabei ist es zwar nicht zwingend, dass das Intensitätsminimum eine echte Nullstelle ist, in der die Intensität des Fluoreszenzverhinderungslichts auf null zurückgeht. Jede Fluoreszenzverhinderungslichtrestintensität in dem Intensitätsminimum reduziert aber die Ausbeute an Fluoreszenzlicht aus dem Intensitätsminimum. Zudem beschränkt sie die Möglichkeit des Einengens des Bereichs des Intensitätsminimums durch Erhöhen der Intensität des Fluoreszenzverhinderungslichts, weil damit auch die Fluoreszenzverhinderungslichtrestintensität in dem Intensitätsminimum ansteigt und in der Folge die Intensität des registrierten Fluoreszenzlichts im Extremfall bis auf null zurückgeht. Es ist daher von großem Interesse, die Fluoreszenzverhinderungslichtrestintensität in dem Intensitätsminimum so klein als möglich und um Idealfall bei null zu halten.

Zur Ausbildung einer ringförmigen Intensitätsverteilung von Fluoreszenzverhinderungslicht um die optische Achse des jeweiligen Objektivs, die auch als Donut bezeichnet wird, ist es bekannt, die Wellenfronten des Fluoreszenzverhinderungslichtstrahls mit einer sogenannten Phasenuhr spiralförmig zu modulieren, wobei die Winkellage des jeweils betrachteten Teils der Phasenfront um die optische Achse von 0 bis 2 π einer relativen Phase von 0 bis λ entspricht. Dabei ist λ die Wellenlänge des Fluoreszenzverhinderungslichts. Wenn das Fluoreszenzverhinderungslicht eines Fluoreszenzverhinderungslichtstrahls mit derart geformten Phasenfronten zirkular polarisiert wird, insbesondere mit auf die Richtung der Phasenveränderung abgestimmter Richtung der zirkularen Polarisation, und der Fluoreszenzverhinderungslichtstrahl dann in die Rückapertur des jeweiligen Objektivs gerichtet wird, bildet sich im Fokus des fokussierten Fluoreszenzverhinderungslichtstrahls eine Nullstelle der Intensität des Fluoreszenzverhinderungslichts aus.

Eine ringförmige Intensitätsverteilung des Fluoreszenzverhinderungslichts um die optische Achse im Fokus des Fluoreszenzverhinderungslichtstrahls ergibt sich auch dann, wenn das Fluoreszenzverhinderungslicht in der Rückapertur des Objektivs eine um die optische Achse umlaufende lineare Polarisation aufweist. Eine solche lineare Polarisation kann mit einer segmentierten doppelbrechenden Phasenplatte erreicht werden, bei der die einzelnen Segmente der Phasenplatte nach Art von Tortenstücken um die optische Achse herum angeordnet sind und dem Fluoreszenzverhinderungslichts jeweils eine senkrecht zu der radialen Haupterstreckungsrichtung des Segments ausgerichtete lineare Polarisierung aufprägen. Bereits mit vier gleich großen Segmenten wird eine weitgehend ringförmige Intensitätsverteilung des Fluoreszenzverhinderungslichts im Fokus des Fluoreszenzverhinderungslichtstrahls erreicht.

Um das Intensitätsminimum des Fluoreszenzverhinderungslichts auch in Richtung der optischen Achse durch Intensitätsmaxima des Fluoreszenzverhinderungslichts einzugrenzen, ist es bekannt, Wellenfronten eines Fluoreszenzverhinderungslichtstrahls, der mit dem bislang angesprochenen Fluoreszenzverhinderungslichtstrahl zur Ausbildung der ringförmigen Intensitätsverteilung des Fluoreszenzverhinderungslichts überlagert werden kann, in einen Kreis um die optische Achse und einen um den Kreis verlaufenden Ring zu unterteilen und dazwischen einen Phasensprung von λ/2 auszubilden. Dabei ist λ wieder die Wellenlänge des Fluoreszenzverhinderungslichts. Bei gleicher Gesamtintensität des Fluoreszenzverhinderungslichts in dem Kreis und dem Ring wird im Fokus des Fluoreszenzverhinderungslichtstrahls eine Nullstelle der Intensität des Fluoreszenzverhinderungslichts erhalten, die in Richtung der optischen Achse von zwei Intensitätsmaxima des Fluoreszenzverhinderungslichts begrenzt ist. Um diese gleich großen Intensitäten des Fluoreszenzverhinderungslichts in dem Kreis und dem Ring zu erzielen, ist eine Abstimmung auf die Rückapertur des Objektivs erforderlich, weil nur die durch die Rückapertur des Objektivs hindurchtretenden Anteile des Fluoreszenzverhinderungslichtstrahls an der Ausbildung der Nullstelle beteiligt sind. Zugleich ist es von Interesse, die Rückapertur des Objektivs vollständig auszunutzen, um die Nullstelle der Intensität des Fluoreszenzverhinderungslichts in Richtung der optischen Achse eng durch die angrenzenden Intensitätsmaxima des Fluoreszenzverhinderungslichts einzugrenzen.

Die Erfinder haben festgestellt, dass hochauflösende Laser-Scanning-Mikroskope auch bei optimal eingestellten Strahlformungsmitteln nur unter Verwendung bestimmter Objektive ein Intensitätsminimum des Fluoreszenzverhinderungslichts im Fokus des Objektivs ausbilden, das die gewünschte Nullstelle aufweist oder dieser zumindest nahe kommt. Sie haben herausgefunden, dass sich Intensitätsminima mit gegen null gehender Fluoreszenzverhinderungslichtrestintensität dabei häufig unter Verwendung von Objektiven erreicht werden, die von ihren Herstellern als für DIC (Differential Interference Contrast)-Mikroskopie geeignet bezeichnet werden. Solche Objektive zeichnen sich gemäß http://www.olympus-ims.com/en/microscope/terms/feature12/ durch eine reduzierte Linsenverzerrung aus. Gemäß http://www.olympus-lifescience.com/en/objectives/ ist bei einem speziell für die DIC-Mikroskopie geeigneten Objektiv UPLFLN-P auch die innere Spannung auf ein absolutes Minimum reduziert.

Zudem haben die Erfinder festgestellt, dass bei einem hochauflösenden Laser-Scanning-Mikroskope die Fluoreszenzverhinderungslichtrestintensität in dem von Intensitätsmaxima begrenzten Intensitätsminimum ansteigt und entsprechend die Ausbeute an Fluoreszenzlicht aus dem Bereich des Intensitätsminimum abfällt, wenn Probensubstrate aus bestimmten Materialien zwischen dem Objektiv und dem Fokus des Objektivs angeordnet werden. Einige Probensubstrate erhöhen die Fluoreszenzverhinderungslichtrestintensität derart, dass kein Fluoreszenzlicht aus dem Bereich des Intensitätsminimums mehr registriert wird.

Aus der WO 2008/098144 A1 sind eine Vorrichtung und ein Verfahren zum Formen von Lichtstrahlen und -mustern mit einer Nullstelle im Zentrum bekannt. Eine verdrehbare λ/2-Platte ist vor einem polarisierenden Strahlteiler angeordnet, der einen kleineren Anteil der Strahlleistung eines einfallenden Strahls als einen Teilstrahl transmittiert, der fokussiert wird, um einen Spot aus Anregungslicht auszubilden. Der polarisierende Strahlteiler reflektiert einen größeren Teil der Strahlleistung des einfallenden Strahls als einen anderen Teilstrahl, der zu einem Donutförmigen Fluoreszenzverhinderungsstrahl fokussiert wird. Die genaue Aufteilung der Strahlleistung zwischen den beiden Teilstrahlen wird durch die Drehstellung der λ/2-Platte bestimmt. Die beiden Teilstrahlen durchlaufen unterschiedliche optische Elemente und werden dann durch einen weiteren polarisierenden Strahlteiler wieder zusammengeführt.

Aus der WO 2013/067643 A1 sind ein Verfahren und ein System zur Verbesserung der Auflösung in der Laserabbildungsmikroskopie bekannt, bei denen eine Probe sowohl mit einem ersten Anregungsstrahl mit einem Intensitätsprofil von maximaler Intensität im Zentrum abgetastet wird, um ein positives Bild der Probe zu erhalten, als auch mit einem zweiten Anregungsstrahl mit einem Intensitätsprofil von minimaler Intensität im Zentrum und einer angrenzenden Region maximaler Intensität um das Zentrum, um ein negatives Abbild der Probe zu erhalten. Das negative Abbild wird dann von dem positiven Abbild abgezogen, um ein gewünschtes hochauflösendes Abbild der Probe zu erhalten. Dabei kommt ein Strahlformungsmodul zur Anwendung, das eine Schalteinrichtung und eine Modenwandleranordnung aufweist. Die Modenwandleranordnung erzeugt entweder den positiven ersten oder den negativen zweiten Anregungsstrahl, und die Schalteinrichtung schaltet zwischen diesen beiden Anregungsstrahlen hin und her. Der einfallende Laserstrahl verläuft je nach Schaltstellung der Schalteinrichtung entlang verschiedener optischer Pfade, in denen verschiedene Modenwandler angeordnet sind. Jeder der Modenwandler der Modenwandlungsanordnung kann unterschiedliche optische Elemente oder Kombinationen von optischen Elementen umfassen, einschließlich einer doppelbrechenden Wellenplattenanordnung, einer elektro-optischen Einrichtung, einer Flüssigkristalleinrichtung, einer Faser, einer Polarisationsregelung oder einer Kombination davon. Der erste Anregungsstrahl kann ein linear polarisierter Gauß-förmiger Strahl, ein zirkularpolarisierter Gauß-förmiger Strahl oder ein radial polarisierter TM-Strahl sein, während der zweite Anregungsstrahl ein zirkular polarisierter Wirbelstrahl oder ein azimutal polarisierter TE-Strahl sein kann. Ein zirkular polarisierter Gauß-förmiger Strahl kann aus einem linear polarisierten Laserstrahl unter Verwendung einer λ/4-Platte erhalten werden. Für mehrfarbige Anwendungen kann eine achromatische oder einstellbare Wellenplatte, wie beispielsweise ein Stapel von doppelbrechenden Platten, Flüssigkristalle oder elektro-optische Komponenten, verwendet werden. Die Erzeugung eines zirkular polarisierten Wirbelmodes wird vorzugsweise in zwei Schritten durchgeführt. Zunächst wird eine λ/4-Platte verwendet, um einen zirkular polarisierten Gauß-förmigen Strahl zu erhalten. Dann wird eine spiralförmige Phasenverschiebung verwendet, um den Wirbelstrahl zu erzeugen. Diese Phasenverschiebung kann entweder in Reflektion oder Transmission hervorgerufen werden. Es kann auch ein einstellbarer Spatial Light Modulator verwendet werden.

### AUFGABE DER ERFINDUNG

Der Erfindung liegt die Aufgabe zugrunde, ein Verfahren zum Verwenden eines hochauflösenden Laser-Scanning-Mikroskops mit einem Objektivanschluss und Strahlformungsmitteln für einen Fluoreszenzverhinderungslichtstrahl sowie ein entsprechendes hochauslösendes Laser-Scanning-Mikroskop aufzuzeigen, bei denen auch nach dem Austauschen des Objektivs oder dem Entfernen oder Austauschen oder Verstellen oder Hinzufügen eines anderen der im Strahlengang des Fluoreszenzverhinderungslichtstrahls bis zum Fokus des Objektivs angeordneten optischen Elemente die Fluoreszenzverhinderungslichtrestintensität in einem von Intensitätsmaxima begrenzten Intensitätsminimum im Fokus des Objektivs weiterhin gegen null geht.

### LÖSUNG

Die Aufgabe der Erfindung wird durch ein Verfahren zum Verwenden eines hochauflösenden Laser-Scanning-Mikroskops mit den Merkmalen des unabhängigen Patentanspruchs 1 und ein hochauflösendes Laser-Scanning-Mikroskop mit den Merkmalen des unabhängigen Patentanspruchs 10 gelöst. Bevorzugte Ausführungsformen des Verfahrens und des Laser-Scanning-Mikroskops sind in den abhängigen Ansprüchen 2 bis 9 bzw. 11 bis 14 definiert.

### BESCHREIBUNG DER ERFINDUNG

Das erfindungsgemäße Verfahren geht von einer Verwendung eines hochauflösenden Laser-Scanning-Mikroskops mit einem Objektivanschluss und Strahlformungsmitteln, die einen in eine Rückapertur eines an den Objektivanschluss angeschlossenen Objektivs gerichteten Fluoreszenzverhinderungslichtstrahl zumindest hinsichtlich seiner Polarisation formen, um im Fokus des Objektivs ein von Intensitätsmaxima begrenztes Intensitätsminimum auszubilden, wobei mehrere, das Objektiv umfassende optische Elemente im Strahlengang des Fluoreszenzverhinderungslichtstrahls bis zu dem Fokus des Objektivs angeordnet sind, bei der Entfernen oder Austauschen oder Verstellen oder Hinzufügen eines der im Strahlengang des Fluoreszenzverhinderungslichtstrahls angeordneten optischen Elemente erfolgt. Gekennzeichnet ist das erfindungsgemäße Verfahren durch ein Kompensieren einer durch das Entfernen oder Austauschen oder Verstellen oder Hinzufügen des einen optischen Elements auftretende Variation von polarisationsändernden Eigenschaften einer Gesamtheit der im Strahlengang des Fluoreszenzverhinderungslichtstrahls bis zu dem Fokus des Objektivs angeordneten optischen Elemente durch Anpassen der Strahlformungsmittel.

Dem erfindungsgemäßen Verfahren liegt die Erkenntnis zugrunde, dass verschiedene im Strahlengang des Fluoreszenzverhinderungslichtstrahls angeordneten optischen Elemente, durch die der Fluoreszenzverhinderungslichtstrahl bis zu dem Fokus des Objektivs hindurchtritt oder von denen er reflektiert wird, die Polarisation des Fluoreszenzverhinderungslichtstrahls aufgrund ihrer polarisationsändernden Eigenschaften so ändern, dass die Voraussetzungen für die Ausbildung eines Intensitätsminimums mit gegen null gehender Fluoreszenzverhinderungslichtrestintensität im Fokus des Objektivs nicht erfüllt sind, obwohl sie durch die hierfür vorgesehenen Strahlformungsmittel eingestellt sein sollten. Solche polarisationsändernden Eigenschaften haben zum Beispiel selbst Objektive, die von ihren Herstellern als "polarisationserhaltend" bezeichnet werden.

Weiterhin beruht das erfindungsgemäße Verfahren auf der Erkenntnis, dass diese Polarisationsänderung des Fluoreszenzverhinderungslichtstrahls vergleichsweise einfach durch die Strahlformungsmittel des jeweiligen Laser-Scanning-Mikroskops kompensiert werden kann. Je nach Ausbildung dieser Strahlformungsmittel können bereits die vorhandenen Einstellungsmöglichkeiten der Strahlformungsmittel ausreichen, oder es reicht aus, diese Einstellungsmöglichkeiten nutzbar zu machen. Häufig ist es jedoch sinnvoll, zusätzliche Einstellmöglichkeiten zu schaffen. Aber auch dies erfordert keinen großen konstruktiven oder finanziellen Aufwand.

In einer konkreten Ausführungsform wird das erfindungsgemäße Verfahren beim Austauschen eines an den Objektivanschluss des Laser-Scanning-Mikroskops angeschlossenen Objektivs gegen ein anderes Objektiv angewendet. Dabei werden die Strahlformungsmittel so an das andere Objektiv angepasst, dass sie nach dem Austauschen eine von einer Polarisationsänderung, insbesondere einer Polarisationsdrehung des Fluoreszenzverhinderungslichtstrahls durch das eine Objektiv abweichende Polarisationsänderung oder Polarisationsdrehung des Fluoreszenzverhinderungslichtstrahls durch das andere Objektiv vorab kompensieren. Vielfach reicht dazu die Einstellung einer zusätzlichen Polarisationsdrehung durch die Strahlformungsmittel aus, die die Polarisationsdrehung des Fluoreszenzverhinderungslichtstrahls durch das andere Objektiv aufhebt.

Durch das Anwenden des erfindungsgemäßen Verfahrens beim Austauschen des Objektivs können auch Objektive Verwendung finden, die bislang für hochauflösende Laser-Scanning-Mikroskope mit Strahlformungsmitteln für einen Fluoreszenzverhinderungslichtstrahl als ungeeignet angesehen wurden. Insbesondere aber sorgt das Anwenden des erfindungsgemäßen Verfahrens beim Austauschen des Objektivs für eine schnelle Anpassung des Laser-Scanning-Mikroskops an das jeweilige Objektiv, die bereits allein, d. h. ohne weitere Nachjustierung, ausreichend sein kann, um das Laser-Scanning-Mikroskop mit dem neuen Objektiv zur hochauflösenden Mikroskopie einzusetzen.

In einer weiteren konkreten Ausführungsform wird das erfindungsgemäße Verfahren beim Verwenden des hochauflösenden Laser-Scanning-Mikroskops zusammen mit verschiedenen, zwischen dem Objektiv und seinem Fokus angeordneten Probensubstraten durchgeführt. Dabei werden die Strahlformungsmittel so an Probensubstrate aus polarisationsänderndem Material angepasst, dass sie eine Polarisationsänderung, insbesondere eine Polarisationsdrehung des Fluoreszenzverhinderungslichtstrahls durch das jeweilige Probensubstrat vorab kompensieren. Vielfach reicht auch dazu die Einstellung einer zusätzlichen Polarisationsdrehung durch die Strahlformungsmittel aus, die die Polarisationsdrehung des Fluoreszenzverhinderungslichtstrahls durch das jeweilige Probensubstrat aufhebt.

Neben dem Austauschen von Objektiven oder dem Wechsel zwischen verschiedenen Probensubstraten kann das erfindungsgemäße Verfahren auch bei Entfernen oder Austauschen oder Verstellen oder Hinzufügen anderer optischer Elemente aus dem bzw. im bzw. in den Strahlengang des Fluoreszenzverhinderungslichtstrahls bis zu dem Fokus des Objektivs angewendet werden. Dazu zählt beispielsweise das Entfernen oder Hinzufügen und Einstellen eines dichroitischen Spiegels aus dem bzw. in den Strahlengang des Fluoreszenzverhinderungslichtstrahls, das sich aufgrund von polarisationsändernden Eigenschaften des dichroitischen Spiegels ohne Kompensation signifikant auf die Polarisation des Fluoreszenzverhinderungslichtstrahls und damit die Qualität des Intensitätsminimums im Fokus des Objektivs auswirken kann.

Weniger oder vorzugsweise gar nicht bezieht sich die vorliegende Erfindung auf das Kompensieren einer Variation der Polarisation des Fluoreszenzverhinderungslichtstrahls, die sich durch das Entfernen oder Austauschen oder Verstellen oder Hinzufügen von speziell zur Polarisationsänderung vorgesehenen optischen Elementen aus dem bzw. im bzw. in den Strahlengang des Fluoreszenzverhinderungslichtstrahls. Bei der Verwendung eines hochauflösenden Laser-Scanning-Mikroskops ist es allerdings nicht üblich, speziell zur Polarisationsänderung vorgesehene optische Elemente aus dem Strahlengang des Fluoreszenzverhinderungslichtstrahls zu entfernen oder dort auszutauschen oder hinzuzufügen. Speziell zur Polarisationsänderung vorgesehene optische Elemente sind insbesondere Verzögerungsplatten.

Weniger und oftmals gar nicht bezieht sich die vorliegende Erfindung auch auf das Kompensieren einer Variation der Polarisation des Fluoreszenzverhinderungslichtstrahls, die sich durch ein reines Verstellen eines optischen Elements in dem Strahlengang des Fluoreszenzverhinderungslichtstrahls ergeben. Vielmehr ist mit dem Verstellen eines optischen Elements in dem Strahlengang des Fluoreszenzverhinderungslichtstrahls insbesondere das beim Austauschen oder Hinzufügen erfolgende Einstellen des optischen Bauteils gemeint, das auch als Teil des Austauschens oder Hinzufügens angesehen werden kann.

Beim jeweiligen Anpassen der Strahlformungsmittel an das Objektiv, das Probensubstrat oder ein anderes der im Strahlengang des Fluoreszenzverhinderungslichtstrahls angeordneten optischen Elemente mit polarisationsändernden Eigenschaften werden die Strahlformungsmittel in eine durch eine Kennung des jeweiligen optischen Elements vorgegebene Einstellung gebracht. Das heißt, bei Kenntnis des optischen Elements bedarf es grundsätzlich keiner Feinabstimmung des Laser-Scanning-Mikroskops auf das jeweilige optische Element. Vielmehr reicht es zumindest im Wesentlichen aus, die Strahlformungsmittel auf eine durch die Kennung des optischen Elements vorgegebene Einstellung einzustellen.

Die Kennung des jeweiligen optischen Elements kann beim Entfernen oder Austauschen oder Verstellen oder Hinzufügen des optischen Elements eingelesen werden, und die durch die Kennung des entfernten oder ausgetauschten oder verstellten oder hinzugefügten optischen Elements vorgegebene Einstellung kann unter Verwendung der Kennung aus einer Datenbank eingelesen werden. Diese Datenbank kann in dem Laser-Scanning-Mikroskop bzw. einem angeschlossenen Computer abgelegt sein. Sie kann aber auch extern eingerichtet sein, wobei dann der Zugriff auf die Datenbank beispielsweise über das Internet erfolgt. Das Einlesen der Kennung kann unmittelbar von dem optischen Element oder aber von einer mit dem optischen Element verbundenen oder anderweitig verknüpften Einheit erfolgen. Beispielsweise kann die Kennung der Platz eines jeweiligen Objektivs in einem Objektivwechsler sein oder zu diesem Platz in dem Laser-Scanning-Mikroskop abgelegt sein.

Grundsätzlich kann die optimale Einstellung der Strahlformungsmittel aber auch durch zielgerichtetes Variieren ihrer Einstellung gefunden werden. So kann die Einstellung der Strahlformungsmittel beim Anpassen nach dem Entfernen oder Austauschen oder Verstellen oder Hinzufügen des optischen Elements mit dem Ziel variiert werden, eine für den Bereich des Intensitätsminimums registrierte Fluoreszenzlichtintensität zu maximieren und/oder eine für den Bereich des Intensitätsminimums registrierte Fluoreszenzverhinderungslichtrestintensität zu minimieren. Dieser Ansatz geht davon aus, dass nur bei Ausbildung eines Intensitätsminimums mit geringer Fluoreszenzverhinderungslichtrestintensität eine nennenswerte Ausbeute an Fluoreszenzlicht aus dem Bereich des Intensitätsminimums erzielt wird und dass diese Ausbeute umso größer ist, desto mehr sich das Intensitätsminimum an die gewünschte Nullstelle annähert. Ein solches zielgerichtetes Variieren der Einstellung der Strahlformungsmittel kann vollautomatisch erfolgen.

Das Anpassen der Strahlformungsmittel an das jeweilige Objektiv, das jeweilige Probensubstrat oder das andere optische Element mit den polarisationsändernden Eigenschaften kann eine oder mehrere der folgenden Maßnahmen umfassen:
- ein Hinzufügen mindestens eines weiteren optischen Elements in den Strahlengang des Fluoreszenzverhinderungslichtstrahls und
- ein Entfernen oder Austauschen oder Verstellen mindestens eines der im Strahlengang des Fluoreszenzverhinderungslichtstrahls angeordneten optischen Elemente.

Das Verstellen des mindestens einen optischen Elements kann dabei ein Rotieren und/oder Verkippen und/oder Einstellen einer Phasenverzögerung mindestens eines von zwei doppelbrechenden optischen Elementen der Strahlformungsmittel umfassen. So kann beispielsweise eine ausgangsseitige λ/4-Platte der Strahlformungsmittel, die zur Zirkularpolarisierung des Fluoreszenzverhinderungslichtstrahls dient, verdreht und/oder verkippt werden.

Ein anderes konkretes Beispiel ist die Anordnung einer λ/2-Platte vor einer ausgangsseitigen λ/4-Platte der Strahlformungsmittel, wobei die λ/2-Platte eine bestimmte Drehstellung gegenüber der ausgangsseitige λ/4-Platte aufweist. Auch hier dient die λ/4-Platte der Zirkularpolarisierung des Fluoreszenzverhinderungslichtstrahls. Die vorgeschaltete λ/2-Platte kann zwar in ihrer bestimmten Drehstellung eine vollständige Zirkularpolarisierung des Fluoreszenzverhinderungslichtstrahls durch die λ/4-Platte verhindern. Beispielsweise bewirkt eine Polarisationsdrehung durch ein nachfolgendes Objektiv aber dennoch die vollständige Zirkularpolarisierung des Fluoreszenzverhinderungslichtstrahls. Die Drehstellung der vor der ausgangsseitigen λ/4-Platte angeordneten λ/2-Platte ist dabei auf das jeweilige optische Element abzustimmen, das aus dem Strahlengang des Fluoreszenzverhinderungslichtstrahls entfernt, dort hinein hinzugefügt oder darin ausgetauscht wird. Konkret kann zu jedem optischen Element eine λ/2-Platte mit der passenden Drehstellung beispielsweise mit Hilfe eines Drehtellers vor der λ/4-Platte angeordnet werden.

Zusätzlich zum Verdrehen der vorgeschalteten λ/2-Platte gegenüber der ausgangsseitigen λ/4-Platte der Strahlformungsmittel kann auch die ausgangsseitige λ/4-Platte verdreht werden. Dann sind die beiden Drehwinkel die von dem jeweiligen optischen Element mit den polarisationsändernden Eigenschaften abhängige Einstellung der Strahlformungsmittel.

Weiterhin kann eine ausgangsseitige elektro-optische Einrichtung oder eine einer ausgangsseitigen λ/4-Platte der Strahlformungsmittel vorgeschaltete elektro-optische Einrichtung auf eine gewünschte Polarisationsdrehung angesteuert werden.

Wenn bei dem erfindungsgemäßen Verfahren das Objektiv ausgetauscht wird, kann zusätzlich eine mit den Strahlformungsmitteln vorgenommene Formung von Wellenfronten des Fluoreszenzverhinderungslichtstrahls angepasst werden. Insbesondere geht es dabei darum, die Formung der Wellenfronten an die Rückapertur des jeweiligen Objektivs anzupassen. In der Anpassung der mit den Strahlformungsmitteln hervorgerufenen Formung der Wellenfronten des Fluoreszenzverhinderungslichtstrahls insbesondere an die Rückapertur des jeweiligen Objektivs ist aber auch eine von der Kompensation der Polarisationsänderung oder Polarisationsdrehung durch das Objektiv getrennt einsetzbare und insoweit unabhängige Erfindung zu sehen.

Besonders effizient wird die Formung von Wellenfronten des Fluoreszenzverhinderungslichts durch unterschiedliche Ansteuerung mindesten eines Spatial Light Modulators oder adaptiven Spiegels an das jeweilige Objektiv angepasst. Dabei kann der adaptive Spiegel eine Vielzahl von nebeneinander angeordneten und getrennt voneinander in Tiefenrichtung ansteuerbaren Mikrospiegel umfassen.

Ein erfindungsgemäßes hochauflösendes Laser-Scanning-Mikroskop mit einem Objektivanschluss und Strahlformungsmitteln, die dazu ausgebildet sind, einen in eine Rückapertur eines an den Objektivanschluss angeschlossenen Objektivs gerichteten Fluoreszenzverhinderungslichtstrahl zumindest hinsichtlich seiner Polarisation zu formen, um im Fokus des Objektivs ein von Intensitätsmaxima gegrenztes Intensitätsminimum auszubilden, wobei mehrere, das Objektiv umfassende optische Elemente im Strahlengang des Fluoreszenzverhinderungslichtstrahls bis zu dem Fokus des Objektivs angeordnet sind, weist eine Anpasseinrichtung für die Strahlformungsmittel auf. Die Anpasseinrichtung für die Strahlformungsmittel ist dazu ausgebildet, eine auftretende Variation von polarisationsändernden Eigenschaften einer Gesamtheit der im Strahlengang des Fluoreszenzverhinderungslichtstrahls angeordneten optischen Elemente zu kompensieren.

An dem erfindungsgemäßen Laser-Scanning-Mikroskop ist eine Einleseeinrichtung und/oder eine Eingabeeinrichtung für eine Kennung eines entfernten oder ausgetauschten oder verstellten oder hinzugefügten optischen Elements vorgesehen. Die Einleseeinrichtung kann konkret an dem Objektivanschluss des Laser-Scanning-Mikroskops vorgesehen sein und dabei beispielsweise die Position des aktuellen Objektivs des Laser-Scanning-Mikroskops in einen Objektivwechsler erfassen. In dem Laser-Scanning-Mikroskop kann dabei abgelegt sein, welches Objektiv sich an welcher Position des Objektivwechslers befindet. Dabei kann zugleich die entsprechende Einstellung der Anpasseinrichtung für das jeweilige Objektiv in dem Laser-Scanning-Mikroskop abgelegt sein, oder sie kann aus einer externen Datenbank eingelesen werden. In jedem Fall ist die Anpasseinrichtung dazu ausgebildet, eine durch die Kennung des jeweiligen eine Polarisationsdrehung des Fluoreszenzverhinderungslichts verursachenden entfernten oder ausgetauschten oder verstellten oder hinzugefügten optischen Elements vorgegebene Einstellung der Strahlformungsmittel vorzunehmen, um die durch das entfernte oder ausgetauschte oder verstellte oder hinzugefügte optische Element auftretende Variation der polarisationsändernden Eigenschaften der Gesamtheit der im Strahlengang des Fluoreszenzverhinderungslichtstrahls angeordneten optischen Elemente zu kompensieren.

Die Anpasseinrichtung des erfindungsgemäßen Laser-Scanning-Mikroskops kann mindestens zwei doppelbrechende optische Elemente aufweisen, von denen mindestens eines von der Anpasseinrichtung rotierbar und/oder kippbar und/oder in seiner Phasenverzögerung einstellbar ist. Die doppelbrechenden optischen Elemente können aus den folgenden Gruppen ausgewählt sind:
- Verzögerungsplatten, λ/2- und λ/4-Verzögerungsplatten,
- Flüssigkristallelemente (LCD) und Flüssigkristallpolymere (LCP) und
- elektrooptische (EO) Elemente.

Mindestens eines der doppelbrechenden optischen Elemente kann von der Anpasseinrichtung um mindestens zwei Raumachsen rotierbar und/oder kippbar sein. Die Raumachsen sind dabei vorzugsweise orthogonal, zumindest aber nichtparallel.

Mindestens eines der doppelbrechenden optischen Elemente kann von der Anpasseinrichtung motorisch oder elektrisch rotierbar und/oder kippbar und/oder in seiner Phasenverzögerung einstellbar sein, indem beispielsweise ein entsprechender Stellmotor zum Rotieren und/oder Kippen einer Phasenplatte der Strahlformungsmittel oder eine elektro-optische Einrichtung vorgesehen ist.

Insbesondere können die Strahlformungsmittel eine von der Anpasseinrichtung beispielsweise durch Anlegen eines elektrischen Felds aktivierbare optisch aktive Substanz umfassen.

Zusätzlich können die Strahlformungsmittel mindestens einen Spatial-Light-Modulator oder adaptiven Spiegel zur Formung von Wellenfronten des Fluoreszenzverhinderungslichts aufweisen, den die Anpasseinrichtung ansteuert, um die Formung der Wellenfronten durch unterschiedliche Ansteuerung an die Rückapertur des jeweiligen Objektiv anzupassen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: illustriert eine Ausführungsform des erfindungsgemäßen Laser-Scanning-Mikroskops mit einem Objektivwechsler und einer Lichtquelle für einen Fluoreszenzverhinderungslichtstrahl.
- **Fig. 2**: illustriert eine Variante der Ausführungsform des erfindungsgemäßen Laser-Scanning-Mikroskops gemäß Fig. 1.
- **Fig. 3**: illustriert eine Ausführungsform des erfindungsgemäßen Laser-Scanning-Mikroskops mit einem Objektivwechsler und zwei Lichtquellen für einen Fluoreszenzverhinderungslichtstrahl.
- **Fig. 4**: illustriert eine Variante der Ausführungsform des erfindungsgemäßen Laser-Scanning-Mikroskops gemäß Fig. 3.
- **Fig. 5**: illustriert eine Variante der Ausführungsform des erfindungsgemäßen Laser-Scanning-Mikroskops gemäß Fig. 4 mit einem zusätzlichen Detektor.
- **Fig. 6**: illustriert eine Variante der Ausführungsform des erfindungsgemäßen Laser-Scanning-Mikroskops gemäß Fig. 4 mit einem optionalen dichroitischen Spiegel; und
- **Fig. 7 bis 10**: illustrieren vier mögliche Ausführungsformen einer Anpasseinrichtung des erfindungsgemäßen Laser-Scanning-Mikroskops.

### FIGURENBESCHREIBUNG

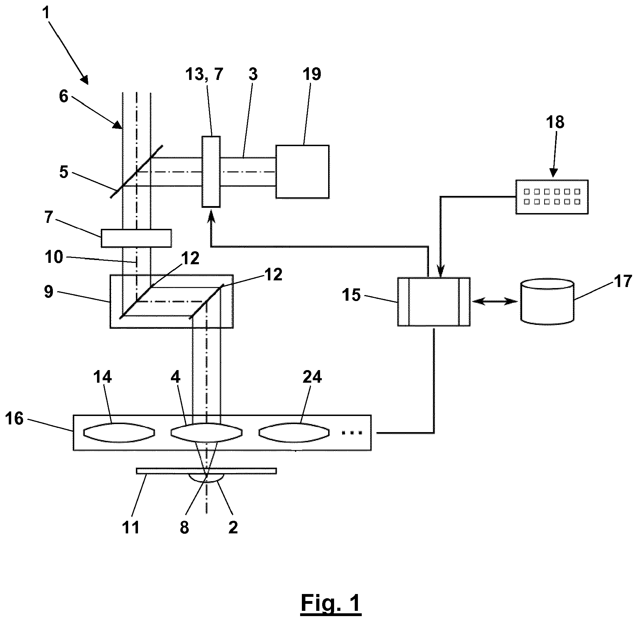

Das in **Fig.** 1 dargestellte Laser-Scanning-Mikroskop 1 dient zur Untersuchung einer Probe 2, die mit einer Lichtintensitätsverteilung abgetastet wird. Die Lichtintensitätsverteilung umfasst einen Fluoreszenzverhinderungslichtstrahl 3. Regelmäßig umfasst die Lichtintensitätsverteilung zusätzlich einen Anregungslichtstrahl, der von einem Objektiv 4 zusammen mit dem Fluoreszenzverhinderungslichtstrahl 3 in die Probe 2 fokussiert wird. Da sich die vorliegende Erfindung speziell mit dem Fluoreszenzverhinderungslichtstrahl 3 beschäftigt, ist hier nur dessen Strahlengang dargestellt. Der Fluoreszenzverhinderungslichtstrahl 3 wird von einer Lichtquelle 19 bereitgestellt und mit Hilfe eines dichroitischen Spiegels 5 in einen Hauptstrahlengang 6 des Laser-Scanning-Mikroskops 1 eingekoppelt. Mit Strahlformungsmitteln 7 wird zumindest die Polarisation des Fluoreszenzverhinderungslichtstrahls 3 so eingestellt, dass eine Intensitätsverteilung von Fluoreszenzverhinderungslicht im Fokus 8 des Objektivs 4 ein von Intensitätsmaxima umgebendes Intensitätsminimum mit möglichst geringer Fluoreszenzverhinderungslichtrestintensität aufweist. Mit diesem Intensitätsminimum wird die Probe 2 abgetastet, wozu der Fokus 8 des Objektivs 4 mit Hilfe eines den Fluoreszenzverhinderungslichtstrahl 3 parallelverschiebenden Scanners 9 in der Probe 2 verlagert wird. Ideale Voraussetzungen zur Ausbildung eines Intensitätsminimums mit minimaler Fluoreszenzverhinderungslichtrestintensität im Fokus 8 sollten beispielsweise dann vorliegen, wenn die Strahlformungsmittel 7 dem Fluoreszenzverhinderungslichtstrahl 3 einen spiralförmigen Verlauf seiner Wellenfronten um die optische Achse 10 aufprägen und den Fluoreszenzverhinderungslichtstrahl 3 zirkular polarisieren. Dazu können die Strahlformungsmittel 7 vor dem Objektiv 4 eine λ/4-Platte umfassen. Selbst wenn diese Voraussetzungen erfüllt sind, wird jedoch vielfach das erwünschte Intensitätsminimum mit geringer Fluoreszenzverhinderungslichtrestintensität im Fokus 8 nicht erreicht. Dies ist nach Erkenntnis der Erfinder der vorliegenden Erfindung darauf zurückzuführen, dass das Objektiv 4, ein eventuell vor der Probe 2 angeordnetes Probensubstrat 11 und/oder andere im Strahlengang des Fluoreszenzverhinderungslichtstrahls 3 angeordnete optische Elemente 12 häufig polarisationsändernde Eigenschaften aufweisen, die die gewünschte Polarisation des Fluoreszenzverhinderungslichtstrahls im Fokus 8 verhindern. Abhilfe schafft eine Anpasseinrichtung 13, die Teil der Strahlformungsmittel 7 ist und die so auf die Polarisation des Fluoreszenzverhinderungslichtstrahls 3 einwirkt, dass die genannten ungewollten Veränderungen der Polarisation des Fluoreszenzverhinderungslichtstrahls 3 z. B. durch das Objektiv 4, das Probensubstrat 11 oder andere im Strahlengang des Fluoreszenzverhinderungslichtstrahls 3 angeordnete optische Elemente 12 kompensiert werden. Diese ungewollten Änderungen der Polarisation des Fluoreszenzverhinderungslichtstrahls 3 sind dann, wenn beispielsweise mehrere verschiedene Objektive 4, 14, 24 und/oder unterschiedliche Probensubstrate 11 verwendet werden, von dem jeweils verwendeten Objektiv 4, 14 oder 24 bzw. Probensubstrat 11 abhängig. Entsprechend muss die Anpasseinrichtung 13 je nach dem verwendeten Objektiv 4, 14, 24 bzw. dem verwendeten Probensubstrat 11 unterschiedlich eingestellt werden. Hierzu ist eine Steuereinrichtung 15 vorgesehen. Die Steuereinrichtung 15 erfasst die Stellung eines als Objektivanschluss des Laser-Scanning-Mikroskops 1 dienenden Objektivwechslers 16 und damit, welches der Objektive 4, 14, 24 aktuell verwendet wird. Abhängig hiervon stellt sie die Anpasseinrichtung 13 ein. Dazu kann die Steuereinrichtung 15 die geeignete Einstellung der Anpasseinrichtung 13 aus einer Datenbank 17 abfragen. Die Datenbank 17 kann lokal vorhanden sein oder über das Internet abgefragt werden. Bei Verwendung verschiedener Probensubstrate 11 muss eine Kennung für das jeweilige Probensubstrat 11 in die Steuereinrichtung 15 beispielsweise über eine Eingabeeinrichtung 18 eingegeben werden, damit die Steuereinrichtung 15 die passende Einstellung der Anpasseinrichtung 13 zum Kompensieren der Veränderung der Polarisation durch das jeweilige Probensubstrat 11 vornehmen kann.

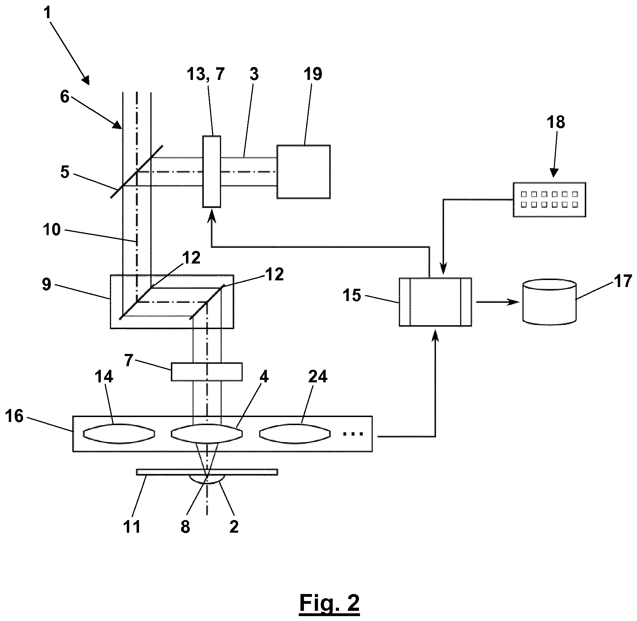

Während bei der Ausführungsform des Laser-Scanning-Mikroskops 1 gemäß Fig. 1 alle Strahlformungsmittel 7 von der Lichtquelle 19 aus gesehen vor dem Scanner 9 angeordnet sind, sind sie bei der Ausführungsform des Laser-Scanning-Mikroskops 1 gemäß **Fig. 2** teilweise, beispielsweise in Form einer λ/4 Platte hinter dem Scanner 9 angeordnet.

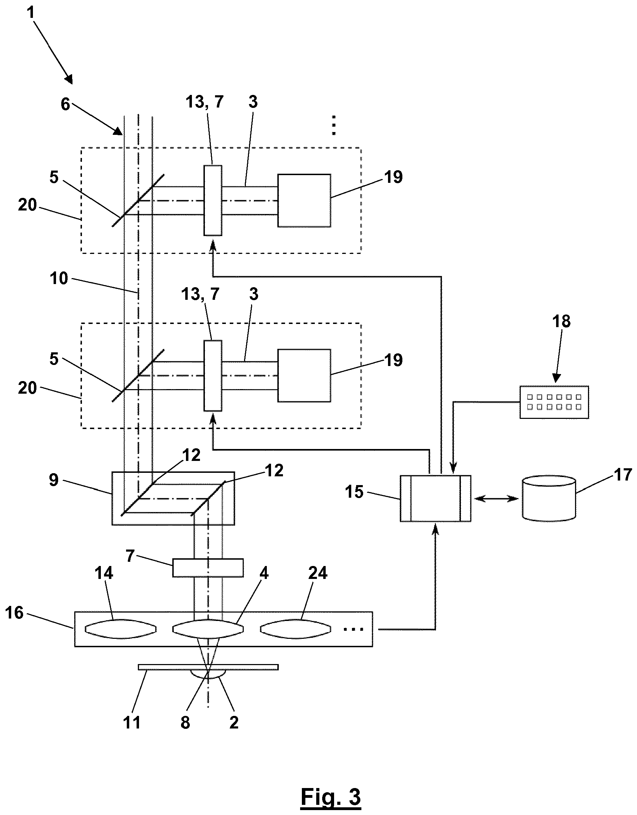

Auch bei der Ausführungsform des Laser-Scanning-Mikroskops 1 gemäß **Fig. 3** liegen die Strahlformungsmittels 7 wie in Fig. 2 zum Teil zwischen dem Scanner 9 und dem Objektiv 4. Hier ist zur Bereitstellung einer weiteren Komponente des Fluoreszenzverhinderungslichtstrahls 3 eine weitere Lichtquelle 19 vorgesehen, die zusammen mit einem weiteren dichroitischen Spiegel 5 und einer weiteren Anpasseinrichtung 13 eine zweite anpassbare Beleuchtungseinheit 20 ausbildet. Dabei kann eine der Beleuchtungseinheit 20 eine Komponente des Fluoreszenzverhinderungslichtstrahls 3 bereitstellen, die das Intensitätsminimum im Fokus 8 durch Intensitätsmaxima in z-Richtung der optischen Achse 10 begrenzt, während die andere Beleuchtungseinheit 20 eine Komponente des Fluoreszenzverhinderungslichtstrahls 3 bereitstellt, die das Intensitätsminimum im Fokus 8 durch Intensitätsmaxima in x- und y-Richtung orthogonal zu der optischen Achse 10 begrenzt. Alternativ kann eine der Beleuchtungseinheit 20 eine Komponente des Fluoreszenzverhinderungslichtstrahls 3 mit einer Wellenlänge bereitstellen, während die andere Beleuchtungseinheit 20 eine andere Komponente des Fluoreszenzverhinderungslichtstrahls 3 mit einer anderen Wellenlänge bereitstellt. Die beiden Wellenlängen der beiden Komponenten können dabei zum Beispiel auf zwei unterschiedliche Fluorophore in der Probe 2 abgestimmt sein, die unterschiedliche Fluoreszenzverhinderungslichtabsorptionsspektren aufweisen. Indem beide Beleuchtungseinheiten 20 eine separate Anpasseinrichtung 13 für die jeweilige Komponente des Fluoreszenzverhinderungslichtstrahls 3 aufweisen, können die Polarisationen der beiden Komponenten in jedem Fall unabhängig voneinander von der Steuereinrichtung 15 optimiert werden, um das gewünschte Intensitätsminimum mit geringer Fluoreszenzverhinderungslichtrestintensität im Fokus 8 zu erreichen.

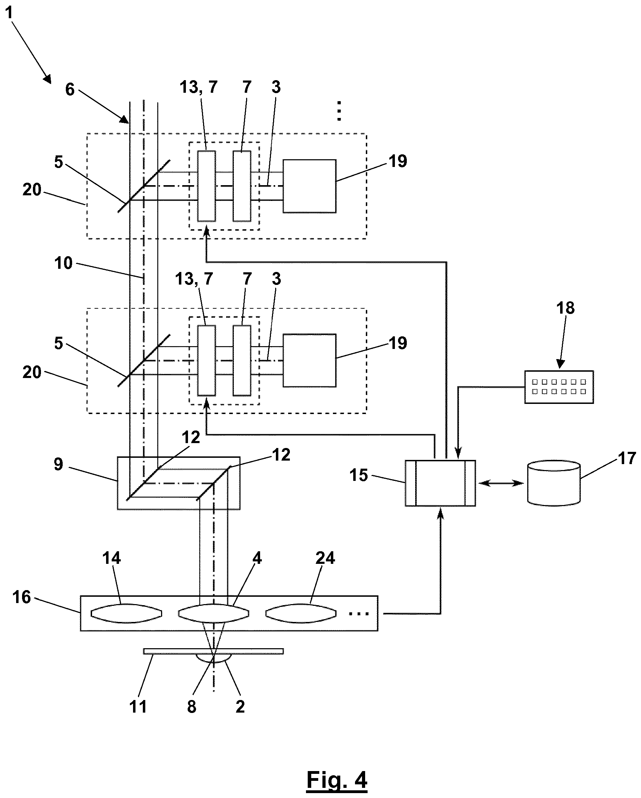

Bei der Ausführungsform des Laser-Scanning-Mikroskops 1 gemäß **Fig. 4** sind alle Strahlformungsmittel 7 auf die beiden Beleuchtungseinheiten 20 verteilt, so dass jede Beleuchtungseinheit 20 eigene Strahlformungsmittel 7 für die jeweilige Komponente des Fluoreszenzverhinderungslichtstrahls 3 aufweist. Mit der zugehörigen Anpasseinrichtung 13 wird für die jeweilige Komponente des Fluoreszenzverhinderungslichtstrahls 3 deren Polarisation angepasst an das jeweilige Objektiv 4, 14, 24 und das jeweilige Probensubstrat 11 so eingestellt, dass sich im Fokus 8 des jeweiligen Objektivs das gewünschte Intensitätsminimum mit geringer Fluoreszenzverhinderungslichtrestintensität ausbildet.

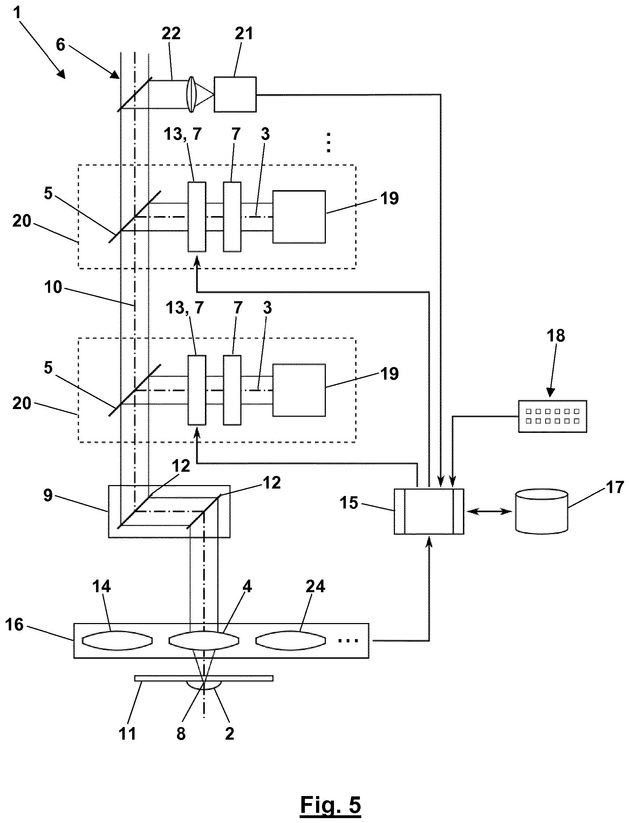

**Fig.** 5 zeigt zusätzlich zu Fig. 4 einen konfokal zu dem Fokus 8 angeordneten Detektor 21 für Fluoreszenzlicht 22 aus der Probe 2. Das Fluoreszenzlicht 22 wird aus dem Hauptstrahlengang 6 des Laser-Scanning-Mikroskops 1 ausgekoppelt, über den hier Fluoreszenzanregungslicht 23 auf die Probe 2 gerichtet wird. Das Signal des Detektors 21 wird zur Feineinstellung der Anpasseinrichtung 13 verwendet, indem deren Einstellungen variiert wird, bis unter ansonsten gleichbleibenden Parametern die Intensität des Fluoreszenzlichts 22 maximiert ist. Dies ist gleichbedeutend damit, dass die Anregungslichtverhinderungsrestintensität in dem Fokus 8 minimiert ist.

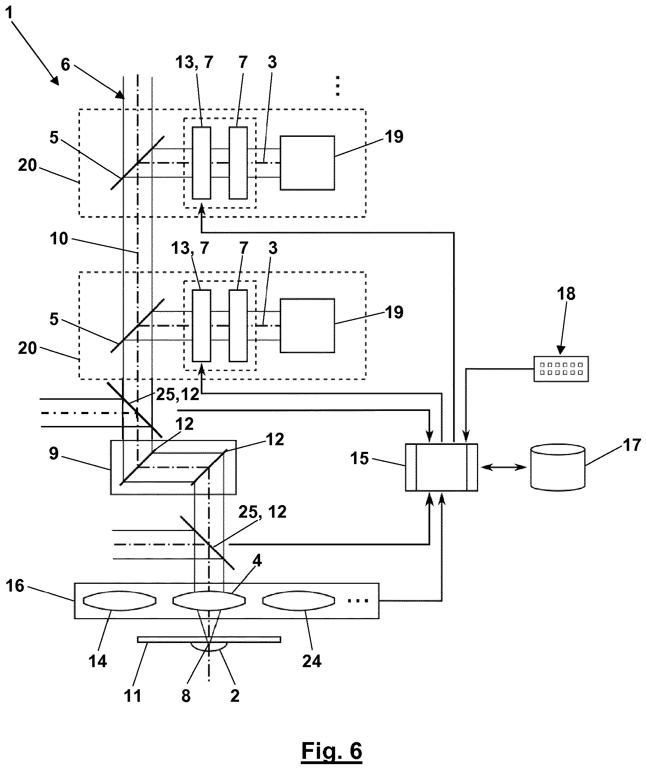

**Fig.** 6 illustriert, wie bei der Anordnung gemäß Fig. 4 ein optionaler dichroitischer Spiegel 25 als weiteres optisches Element 12 an verschiedenen Stellen im Strahlengang des Fluoreszenzverhinderungslichtstrahls 3 angeordnet werden kann, um beispielsweise bei Bedarf bestimmte Komponenten des Fluoreszenzlichts 22 von der Probe 2 zum Beispiel zu einem Detektor hin auszukoppeln. Mit Hilfe der Einstellung der Anpasseinrichtung 13 durch die Steuereinrichtung 15 werden auch die Auswirkungen des sich im Strahlengang des Fluoreszenzverhinderungslichtstrahls 3 befindlichen dichroitischen Spiegels 25 auf die Polarisation des Fluoreszenzverhinderungslichtstrahls 3 im Fokus 8 kompensiert. Die Auswirkungen des dichroitischen Spiegels 25 auf die Polarisation des Fluoreszenzverhinderungslichtstrahls 3 - und damit auch deren Kompensation - hängen sowohl von dem dichroitischen Spiegels 25 selbst als auch den Winkeln ab, unter denen er zu der optischen Achse 10 ausgerichtet ist.

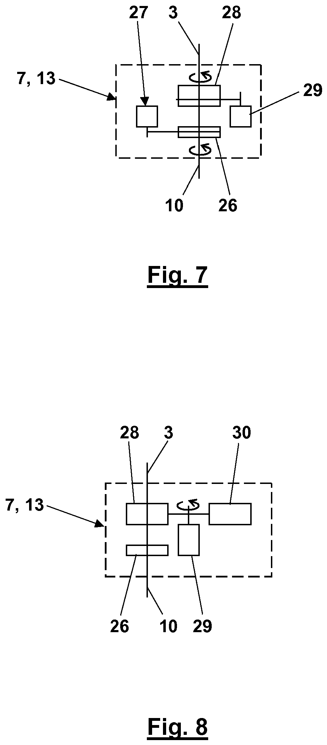

**Fig. 7** illustriert eine mögliche Ausführungsform der Anpasseinrichtung 13 bei einem erfindungsgemäßen Laser-Scanning-Mikroskop 1 gemäß den Fig. 1 bis 6. Hier ist eine ausgangsseitige λ/4-Platte 26 der strahlformenden Mittel 7 mit Hilfe eines Stellmotors 27 um die optische Achse 10 verdrehbar, und eine der λ/4-Platte 26 vorgeschaltete λ/2-Platte 28 ist mit Hilfe eines weiteren Stellmotors 29 um die optische Achse 10 verdrehbar. Die Polarisation des durch die Anpasseinrichtung 13 hindurchtretenden Fluoreszenzverhinderungslichtstrahls 3 kann mit Hilfe der Stellmotoren 27 und 29 so angepasst werden, dass sich hinter dem nachfolgenden Objektiv 4, 14 oder 24 des Laser-Scanning-Mikroskops 1 die gewünschte Polarisation des Fluoreszenzverhinderungslichtstrahls 3 im Fokus 8 einstellt, wie sie für die Ausbildung eines Intensitätsminimums mit geringer Fluoreszenzverhinderungslichtrestintensität Voraussetzung ist. Grundsätzlich ist bei der Ausführungsform der Anpasseinrichtung 13 gemäß Fig. 7 der Stellmotor 27 für die λ/4-Platte 26 optional, d. h. die λ/4-Platte 26 kann eine feste Drehstellung aufweisen.

Entsprechend ist bei der Ausführungsform der Anpasseinrichtung 13 gemäß **Fig. 8** die λ/4-Platte 26 drehfest angeordnet, und mit dem Stellmotor 29 wird die in vorgegebener Orientierung ausgerichtete λ/2-Platte 28 je nach Objektiv 4, 14 oder 24 gegen eine λ/2-Platte 30 mit anderer vorgegebener Orientierung oder keine λ/2-Platte ausgetauscht.

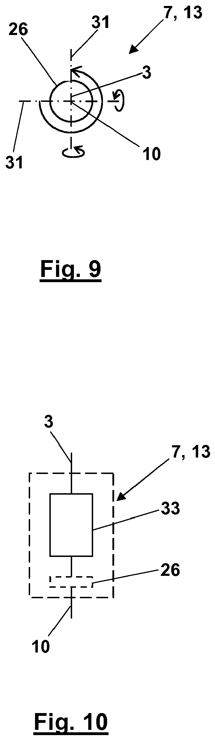

Bei der Ausführungsform der Anpasseinrichtung 13, die in **Fig. 9** skizziert ist, ist nur die λ/4-Platte 26 vorgesehen. Diese ist mit nicht dargestellten Stellmotoren um die optische Achse 10 verdrehbar und um zwei dazu senkrecht verlaufende Kippachsen 31 verkippbar. Auch auf diese Weise kann die gewünschte Polarisation des Fluoreszenzverhinderungslichtstrahls 3 im Fokus 8 des Objektivs 4, 14 oder 24 vorgegeben werden.

Die in **Fig. 10** illustrierte Ausführungsform der Anpasseinrichtung 13 umfasst eine elektro-optische Einrichtung 33, die zur Polarisationsdrehung des Fluoreszenzverhinderungslichtstrahls 3 um die optische Achse 10 ansteuerbar ist, um eine Polarisationsdrehung durch im Strahlengang des Fluoreszenzverhinderungslichtstrahls 3 angeordnete unterschiedliche optische Elemente mit unterschiedlichen polarisationsändernden Eigenschaften zu kompensieren. Optional umfasst die Anpasseinrichtung 13 hier zusätzlich die λ/4-Platte 26 zur grundsätzlichen Zirkularpolarisierung des Fluoreszenzverhinderungslichtstrahls 3. Die λ/4-Platte 26 ist aber beispielsweise nicht vorhanden, wenn der Fluoreszenzverhinderungslichtstrahl 3 zuvor mit Hilfe einer segmentierten doppeltbrechenden Phasenplatte mit einer bestimmten Verteilung der Polarisationsrichtungen linear polarisiert wurde, um das von Intensitätsmaxima begrenzte Intensitätsminimum im Fokus 8 des Objektivs 4, 14 oder 24 auszubilden.

### BEZUGSZEICHENLISTE

- 1: Laser-Scanning-Mikroskop
- 2: Probe
- 3: Fluoreszenzverhinderungslichtstrahl
- 4: Objektiv
- 5: Spiegel
- 6: Hauptstrahlengang
- 7: Strahlformungsmittel
- 8: Fokus
- 9: Scanner
- 10: optische Achse
- 11: Probensubstrat
- 12: optisches Element
- 13: Anpasseinrichtung
- 14: Objektiv
- 15: Steuereinrichtung
- 16: Objektivwechsler
- 17: Datenbank
- 18: Eingabeeinrichtung
- 19: Lichtquelle
- 20: Beleuchtungseinheit
- 21: Detektor
- 22: Fluoreszenzlicht
- 23: Fluoreszenzanregungslicht
- 24: Objektiv
- 25: Spiegel
- 26: λ/4-Platte
- 27: Stellmotor
- 28: λ/2-Platte
- 29: Stellmotor
- 30: λ/2-Platte
- 31: Kippachse
- 32: Kippachse
- 33: elektro-optische Einrichtung

## Patentansprüche

1. Verfahren zum Verwenden eines hochauflösenden Laser-Scanning-Mikroskops (1) mit einem Objektivanschluss und Strahlformungsmitteln (7), die einen in eine Rückapertur eines an den Objektivanschluss angeschlossenen Objektivs (4, 14, 24) gerichteten Fluoreszenzverhinderungslichtstrahl (3) zumindest hinsichtlich seiner Polarisation formen, um im Fokus (8) des Objektivs (4, 14, 24) ein von Intensitätsmaxima begrenztes Intensitätsminimum auszubilden, wobei mehrere, das Objektiv (4, 14, 24) umfassende optische Elemente (4, 5, 11, 12, 14, 24) im Strahlengang des Fluoreszenzverhinderungslichtstrahls (3) bis zu dem Fokus (8) des Objektivs (4, 14, 24) angeordnet sind und wobei die Strahlformungsmittel (7) von den optischen Elementen (4, 5, 11, 12, 14,24) verschieden sind, wobei das Verfahren aufweist:
- ein Entfernen oder Austauschen oder Verstellen oder Hinzufügen eines der im Strahlengang des Fluoreszenzverhinderungslichtstrahls (3) angeordneten optischen Elemente (4, 5, 11, 12, 14, 24),
**gekennzeichnet durch**
- ein Kompensieren einer durch das Entfernen oder Austauschen oder Verstellen oder Hinzufügen des einen optischen Elements (4, 5, 11, 12, 14, 24) auftretende Variation von polarisationsändernden Eigenschaften einer Gesamtheit der im Strahlengang des Fluoreszenzverhinderungslichtstrahls (3) angeordneten optischen Elemente (4, 5, 11, 12, 14, 24) durch Anpassen der Strahlformungsmittel (7),
- wobei die Strahlformungsmittel (7) beim Entfernen oder Austauschen oder Verstellen oder Hinzufügen des optischen Elements (4, 5, 11, 12, 14, 24) zum Anpassen in eine durch eine Kennung des entfernten oder ausgetauschten oder verstellten oder hinzugefügten optischen Elements (4, 5, 11, 12, 14, 24) vorgegebene Einstellung gebracht werden.

2. Verfahren nach Anspruch 1, **dadurch gekennzeichnet,**
- **dass** das Austauschen des optischen Elements (4, 5, 11, 12, 14, 24) ein Austauschen des an den Objektivanschluss angeschlossenen Objektivs (4) gegen ein anderes Objektiv (14, 24) oder ein Austauschen eines Probensubstrats (11) aus polarisationsänderndem Material gegen ein anderes Probensubstrat (11) aus polarisationsänderndem Material ist und
- **dass** die Strahlformungsmittel (7) so an das andere Objektiv (14, 24) oder das andere Probensubstrat (11) angepasst werden, dass die aus dem Austauschen des Objektivs (4, 14, 24) oder des Probensubstrats (11) resultierende Variation der polarisationsändernden Eigenschaften der Gesamtheit der im Strahlengang des Fluoreszenzverhinderungslichtstrahls (3) angeordneten optischen Elemente (4, 5, 11, 12, 14, 24) kompensiert wird.

3. Verfahren nach Anspruch 1 oder 2, **dadurch gekennzeichnet, dass** die Variation der polarisationsändernden Eigenschaften der Gesamtheit der im Strahlengang des Fluoreszenzverhinderungslichtstrahls (3) angeordneten optischen Elemente (4, 5, 11, 12, 14, 24) unter oder durch Hervorrufen einer zusätzlichen Polarisationsdrehung mit den Strahlformungsmittel (7) kompensiert wird.

4. Verfahren nach einem der vorhergehenden Ansprüche, **dadurch gekennzeichnet, dass** die Kennung des entfernten oder ausgetauschten oder verstellten oder hinzugefügten optischen Elements (4, 5, 11, 12, 14, 24) beim Entfernen oder Austauschen oder Verstellen oder Hinzufügen eingelesen wird und dass die durch die Kennung des entfernten oder ausgetauschten oder verstellten oder hinzugefügten optischen Elements (4, 5, 11, 12, 14, 24) vorgegebene Einstellung unter Verwendung der Kennung aus einer Datenbank (17) eingelesen wird.

5. Verfahren nach einem der vorhergehenden Ansprüche, **dadurch gekennzeichnet, dass** das Anpassen der Strahlformungsmittel (7) ein Hinzufügen mindestens eines weiteren optischen Elements (4, 5, 11, 12, 14, 24) in den Strahlengang des Fluoreszenzverhinderungslichtstrahls (3) oder ein Entfernen oder Austauschen oder Verstellen mindestens eines der im Strahlengang des Fluoreszenzverhinderungslichtstrahls (3) angeordneten optischen Elemente (4, 5, 11, 12, 14, 24) umfasst.

6. Verfahren nach Anspruch 5, **dadurch gekennzeichnet, dass** das Verstellen des mindestens einen optischen Elements (4, 5, 11, 12, 14, 24) ein Rotieren und/oder Verkippen und/oder Einstellen einer Phasenverzögerung mindestens eines von zwei doppelbrechenden optischen Elementen (4, 5, 11, 12, 14, 24) der Strahlformungsmittel (7) umfasst.

7. Verfahren nach einem der vorhergehenden Ansprüche, **dadurch gekennzeichnet, dass** beim Anpassen eine Einstellung der Strahlformungsmittel (7) mit dem Ziel variiert wird, eine für den Bereich des Intensitätsminimums registrierte Fluoreszenzlichtintensität zu maximieren und/oder eine für den Bereich des Intensitätsminimums registrierte Fluoreszenzverhinderungslichtrestintensität zu minimieren.

8. Verfahren nach einem der vorhergehenden Ansprüche, wobei das Austauschen des optischen Elements (4, 5, 11, 12, 14, 24) ein Austauschen des an den Objektivanschluss angeschlossenen Objektivs (4) gegen ein anderes Objektiv (14, 24) ist, **dadurch gekennzeichnet,**
- **dass** das Anpassen der Strahlformungsmittel (7) an das andere Objektiv (14, 24) ein Anpassen einer mit den Strahlformungsmitteln (7) vorgenommenen Formung von Wellenfronten des Fluoreszenzverhinderungslichtstrahls (3) umfasst.

9. Verfahren nach Anspruch 8, **dadurch gekennzeichnet, dass** das Anpassen der Formung der Wellenfronten des Fluoreszenzverhinderungslichtstrahls (3) ein Anpassen einer Ansteuerung mindestens eines Spatial-Light Modulators oder adaptiven Spiegels an das andere Objektiv (14, 24) umfasst.

10. Hochauflösendes Laser-Scanning-Mikroskop (1) mit:
- einem Objektivanschluss,
- Strahlformungsmitteln (7), die dazu ausgebildet sind, einen in eine Rückapertur (8) eines an den Objektivanschluss angeschlossenen Objektivs (4, 14, 24) gerichteten Fluoreszenzverhinderungslichtstrahl (3) zumindest hinsichtlich seiner Polarisation zu formen, um im Fokus (8) des Objektivs (4, 14, 24) ein von Intensitätsmaxima gegrenztes Intensitätsminimum auszubilden,
- wobei mehrere, das Objektiv (4, 14, 24) umfassende optische Elemente (4, 5, 11, 12, 14, 24) im Strahlengang des Fluoreszenzverhinderungslichtstrahls (3) bis zu dem Fokus (8) des Objektivs (4, 14, 24) angeordnet sind und wobei die Strahlformungsmittel (7) von den optischen Elementen (4, 5, 11, 12, 14, 24) verschieden sind, und
- einer Anpasseinrichtung (13) für die Strahlformungsmittel (7), die dazu ausgebildet ist, eine Variation von polarisationsändernden Eigenschaften einer Gesamtheit der im Strahlengang des Fluoreszenzverhinderungslichtstrahls (3) angeordneten optischen Elemente (4, 5, 11, 12, 14, 24) zu kompensieren,
**gekennzeichnet durch**
- eine Einleseeinrichtung und/oder eine Eingabeeinrichtung (18) für eine Kennung eines entfernten oder ausgetauschten oder verstellten oder hinzugefügten optischen Elements (4, 5, 11, 12, 14, 24) vorgesehen ist, wobei die Anpasseinrichtung (13) dazu ausgebildet ist, eine durch die Kennung vorgegebene Einstellung der Strahlformungsmittel (7) vorzunehmen, um die durch das entfernte oder ausgetauschte oder verstellte oder hinzugefügte optische Element (4, 5, 11, 12, 14, 24) auftretende Variation der polarisationsändernden Eigenschaften der Gesamtheit der im Strahlengang des Fluoreszenzverhinderungslichtstrahls (3) angeordneten optischen Elemente (4, 5, 11, 12, 14, 24) zu kompensieren.

11. Laser-Scanning-Mikroskop (1) nach Anspruch 10, **dadurch gekennzeichnet, dass** die Einleseeinrichtung an dem Objektivanschluss vorgesehen ist.

12. Laser-Scanning-Mikroskop (1) nach einem der Ansprüche 10 und 11, **dadurch gekennzeichnet, dass** die Strahlformungsmittel (7) mindestens zwei doppelbrechende optische Elemente umfassen, von denen mindestens eines von der Anpasseinrichtung (13) rotierbar und/oder kippbar und/oder in seiner Phasenverzögerung einstellbar ist,
- wobei die doppelbrechenden optischen Elemente optional aus den folgenden Gruppen ausgewählt sind:
- Verzögerungsplatten, λ/2- und λ/4-Verzögerungsplatten,
- Flüssigkristallelemente (LCD) und Flüssigkristallpolymere (LCP) und
- elektrooptische (EO) Elemente, und/oder
- wobei mindestens eines der doppelbrechenden optischen Elemente von der Anpasseinrichtung (13) optional um mindestens zwei nichtparallele oder orthogonale Raumachsen rotierbar und/oder kippbar sind und/oder
- wobei mindestens eines der doppelbrechenden optischen Elemente von der Anpasseinrichtung (13) optional motorisch oder elektrisch rotierbar und/oder kippbar und/oder in seiner Phasenverzögerung einstellbar ist.

13. Laser-Scanning-Mikroskop (1) nach einem der Ansprüche 10 bis 12, **dadurch gekennzeichnet, dass** die Strahlformungsmittel (7) eine optisch aktive Substanz umfassen.

14. Laser-Scanning-Mikroskop (1) nach einem der Ansprüche 10 bis 13, **dadurch gekennzeichnet, dass** die Strahlformungsmittel (7) mindestens einen Spatial-Light-Modulator oder adaptiven Spiegel zur Formung von Wellenfronten des Fluoreszenzverhinderungslichtstrahls (3) aufweisen, den die Anpasseinrichtung (13) ansteuert, um die Formung der Wellenfronten durch unterschiedliche Ansteuerung an die Rückapertur des jeweiligen Objektivs (4, 14, 24) anzupassen.

## Claims

1. Method of using a high resolution laser scanning microscope (1) having an objective connector and beam shaping means (7) which shape a fluorescence inhibition light beam (3) directed into a back aperture of an objective (4, 14, 24) connected to the objective connector at least with regard to its polarization to form an intensity minimum delimited by intensity maxima in a focus (8) of the objective (4, 14, 24), wherein a plurality of optical elements (4, 5, 11, 12, 14, 15) including the objective (4, 14, 24) are arranged in the beam path of the fluorescence inhibition light beam (3) up to the focus (8) of the objective (4, 14, 24), and wherein the beam shaping means (7) differ from the optical elements (4, 5, 11, 12, 14, 24), wherein the method comprises:
- removing or exchanging or altering or adding one of the optical elements (4, 5, 11, 12, 14, 24) arranged in the beam path of the fluorescence inhibition light beam (3),
**characterized by**
- compensating a variation of polarization varying properties of a totality of the optical elements (4, 5, 11, 12, 14, 24) arranged in the beam path of the fluorescence inhibition light beam (3) caused by removing, exchanging, altering or adding the one optical element (4, 5, 11, 12, 14, 24) by adapting the beam shaping means (7),
- wherein, upon removing or exchanging or altering or adding the optical element 4, 5, 11, 12, 14, 24, the beam shaping means (7), for adapting, are brought in an adjustment predetermined by an identifier of the removed or exchanged or altered or added optical element (4, 5, 11, 12, 14, 24).

2. Method of claim 1, **characterized in**
- **that** exchanging the optical element (4, 5, 11, 12, 14, 24) is exchanging an objective (4) connected to the objective connector for another objective (40, 24) or an exchanging of a sample substrate (11) of polarization varying material for another sample substrate (11) of polarization varying material, and
- **that** the beam shaping means (7) are adapted to the other objective (14, 24) or the other sample substrate (11) in such a way that the variation of the polarization varying properties of the totality of the optical elements (4, 5, 11, 12, 14, 24) arranged in the beam path of the fluorescence inhibition light beam (3) resulting from exchanging the objective (4, 14, 24) or the sample substrate (11) is compensated.

3. Method of claim 1 or 2, **characterized in that** the variation of the polarization varying properties of the totality of the optical elements (4, 5, 11, 12, 14, 24) arranged in the beam path of the fluorescence inhibition light beam (3) is compensated using an additional polarization rotation or causing an additional polarization rotation by means of the beam shaping means (7).

4. Method of any of the preceding claims, **characterized in that** the identifier of the removed or exchanged or altered or added optical element (4, 5, 11, 12, 14, 24) is read-in upon removing or exchanging or adjusting or adding, and that the adjustment predetermined by the identifier of the removed or exchanged or altered or added optical element (4, 5, 11, 12, 14, 24) is read out of a database (17) using the identifier.

5. Method of any of the preceding claims, **characterized in that** adapting of the beam shaping means (7) includes adding at least one further optical element (4, 5, 11, 12, 14, 24) in the beam path of the fluorescence inhibition light beam (3) or a removal or exchanging or altering at least one of the optical elements (4, 5, 11, 12, 14, 24) arranged in the beam path of the fluorescence inhibition light beam (3).

6. Method of claim 5, **characterized in that** altering the at least one optical element (4, 5, 11, 12, 14, 24) includes rotating and/or tilting and/or adjusting a phase delay of at least one of two birefringent optical elements (4, 5, 11, 12, 14, 24) of the beam shaping means (7).

7. Method of any of the preceding claims, **characterized in that** in adapting an adjustment of the beam shaping means (7) is varied with the objective of maximizing a fluorescence light intensity registered for the area of the intensity minimum and/or of minimizing a fluorescence inhibition light intensity remainder registered for the area of the intensity minimum.

8. Method of any of the preceding claims, wherein exchanging the optical element (4, 5, 11, 12, 14, 24) is replacing the objective (4) connected to the objective connector by another objective (14, 24), **characterized in**
- **that** adapting the beam shaping means (7) of the other objective (14, 24) includes adapting shaping of wave fronts of the fluorescence inhibition light beam (3) conducted by the beam shaping means (7).

9. Method of claim 8, **characterized in that** adapting shaping of the wave fronts of the fluorescence inhibition light beam (3) includes adapting a control of at least one spatial light modulator or adaptive mirror to the other objective (14, 24).

10. High resolution laser-scanning-microscope (1) comprising:
- an objective connector,
- beam shaping means (7), which are configured for shaping a fluorescence inhibition light beam (3) directed in a back aperture (8) of an objective (4, 14, 24) connected to the objective connector at least with respect to its polarization to form an intensity minimum delimited by intensity maxima in the focus (8) of the objective (4, 14, 24),
- wherein a plurality of optical elements (4, 5, 11, 12, 14, 24) including the objective (4, 14, 24) are arranged in the beam path of the fluorescence inhibition light beam (3) up to the focus (8) of the objective (4, 14, 24), and wherein the beam shaping means (7) differ from the optical elements (4, 5, 11, 12, 14, 24), and
- an adaptation device (13) for the beam shaping means (7), which is configured for compensating a variation of polarization varying properties of a totality of the optical elements (4, 5, 11, 12, 14, 24) arranged in the beam parts of the fluorescence inhibition light beam (3),
**characterized by**
- a read in device and/or a input device (18) for an identifier of a removed or exchanged or altered of added optical element (4, 5, 11, 12, 14, 24), wherein the adaptation device (13) is configured for conducting an adjustment of the beam shaping means determined by the identifier to compensate the variation of polarization varying properties of the totality of the optical elements (4, 5, 11, 12, 14, 24) arranged in the beam path of the fluorescence inhibition light beam (3) caused by the removed or exchanged or altered or added optical elements (4, 5, 11, 12, 14, 24).

11. Laser-scanning-microscope (1) of claim 10, **characterized in that** the read in device is provided as the objective connector.

12. Laser-scanning-microscope (1) of any of the claims 10 and 11, **characterized in that** the beam shaping means (7) include at least two birefringent optical elements, at least one of which being rotatable and/or tiltable or adjustable with regard to their phase delay by the adaptation device (13),
- wherein the birefringent optical elements are optionally selected from one of the following groups:
- phase plates, λ/2- and λ/4-phase plates,
- liquid crystal devices (LCD) and liquid crystal polymers (LCP) and
- electro optical (EO) elements, and/or
- wherein at least one of the birefringent optical elements is rotatable and/or tiltable by the adaptation device (13), optionally about at least two non-parallel or orthogonal spatial directions, and/or
- wherein at least one of the birefringent optical elements is rotatable and/or tiltable and/or adjustable in its phase delay by means of the adaptation device (13), optionally by means of a motor or electrically.

13. Laser-scanning-microscope (1) of any of the claims 10 to 12, **characterized in that** the beam shaping means (7) include an optically active substance.

14. Laser-scanning- microscope (1) of any of the claims 10 to 13, **characterized in that** the beam shaping means (7) include at least one spatial light modulator or adaptive mirror for shaping of wave fronts of the fluorescence inhibition light (3), which is controlled by the adaptation device (13) to adapt the shaping of the wave fronts, by means of varying control, to the back aperture of the respective objective (4, 14, 24).

## Revendications

1. Procédé d'utilisation d'un microscope à balayage laser à haute résolution (1) avec un raccord d'objectif et des moyens de formation de faisceaux (7), qui forment un faisceau lumineux empêchant la fluorescence (3) orienté vers une ouverture arrière d'un objectif (4, 14, 24) raccordé au raccord d'objectif, au moins en ce qui concerne sa polarisation, afin de former, dans le foyer (8) de l'objectif (1, 14, 24), un minimum d'intensité limité par des maxima d'intensité, dans lequel plusieurs éléments optiques (4, 5, 11, 12, 14, 24) comprenant l'objectif (4, 14, 24) sont disposés dans le trajet du faisceau lumineux empêchant la fluorescence (3) jusqu'au foyer (8) de l'objectif (4, 14, 24) et dans lequel les moyens de formation de faisceaux (7) sont différents des éléments optiques (4, 5, 11, 12, 14, 24), dans lequel le procédé comprend :
- une suppression ou un remplacement ou un déplacement ou un ajout d'un des éléments optiques (4, 5, 11, 12, 14, 24) disposés dans le trajet du faisceau lumineux empêchant la fluorescence (3),
**caractérisé par**
- une compensation d'une variation, due à la suppression ou au remplacement ou au déplacement ou à l'ajout d'un élément optique (4, 5, 11, 12, 14, 24), des propriétés modifiant la polarisation d'un ensemble des éléments optiques (4, 5, 11, 14, 24) disposés dans le trajet du faisceau lumineux empêchant la fluorescence (3), par l'adaptation des moyens de formation de faisceaux (7),
- dans lequel les moyens de formation de faisceaux (7), lors de la suppression ou du remplacement ou du déplacement ou de l'ajout de l'élément optique (4, 5, 11, 14, 24), sont amenés, pour l'adaptation, à un réglage prédéterminé par un identifiant de l'élément optique (4, 5, 11, 12, 14, 24) supprimé ou remplacé ou déplacé ou ajouté.

2. Procédé selon la revendication 1, **caractérisé en ce que**
- le remplacement de l'élément optique (4, 5, 11, 12, 14, 24) est un remplacement de l'objectif (4) raccordé au raccord d'objectif par un autre objectif (14, 24) ou un remplacement d'un substrat d'échantillon (11) constitué d'un matériau modifiant la polarisation par un autre substrat d'échantillon (11) en matériau modifiant la polarisation et
- les moyens de formation de faisceaux (7) sont adaptés à l'autre objectif (14, 24) ou à l'autre substrat d'échantillon (11) de façon à ce que la variation, résultant du remplacement de l'objectif (4, 14, 24) ou du substrat d'échantillon (11), des propriétés modifiant la polarisation de l'ensemble des éléments optiques (4, 5, 11, 14, 24) disposés dans le trajet du faisceau lumineux empêchant la fluorescence (3) soit compensée.

3. Procédé selon la revendication 1 ou 2, **caractérisé en ce que** la variation des propriétés modifiant la polarisation de l'ensemble des éléments optiques (4, 5, 11, 14, 24) disposés dans le trajet du faisceau lumineux empêchant la fluorescence (3) est compensée en provoquant une rotation de polarisation supplémentaire avec les moyens de formation de faisceaux (7).

4. Procédé selon l'une des revendications précédentes, **caractérisé en ce que** l'identifiant de l'élément optique (4, 5, 11, 12, 14, 24) supprimé ou remplacé ou déplacé ou ajouté est lu lors de la suppression ou du remplacement ou du déplacement ou de l'ajout et **en ce que** l'identifiant de l'élément optique (4, 5, 11, 12, 14, 24) supprimé ou remplacé ou déplacé ou ajouté permet de lire le réglage prédéterminé à l'aide de l'identifiant à partir d'une base de données (17).

5. Procédé selon l'une des revendications précédentes, **caractérisé en ce que** l'adaptation des moyens de formation de faisceaux (7) comprend un ajout d'au moins un autre élément optique (4, 5, 11, 12, 14, 24) dans le trajet du faisceau lumineux empêchant la fluorescence (3) ou une suppression ou un remplacement ou un déplacement d'au moins des éléments optiques (4, 5, 11, 12, 14, 24) disposés dans le trajet du faisceau lumineux empêchant la fluorescence (3).

6. Procédé selon la revendication 5, **caractérisé en ce que** le déplacement de l'au moins un élément optique (4, 5, 11, 12, 14, 24) comprend une rotation et/ou le basculement et/ou le réglage d'un retard de phase d'un parmi deux éléments optiques (4, 5, 11, 12, 14, 24) biréfringents des moyens de formation de faisceaux (7).

7. Procédé selon l'une des revendications précédentes, **caractérisé en ce que**, lors de l'adaptation, un réglage des moyens de formation de faisceaux (7) est modifié, afin de maximiser une intensité lumineuse de fluorescence enregistrée pour la zone du minimum d'intensité et/ou afin de minimiser une intensité lumineuse empêchant la fluorescence enregistrée pour la zone du minimum d'intensité.

8. Procédé selon l'une des revendications précédentes, dans lequel le remplacement de l'élément optique (4, 5, 11, 12, 14, 24) est un remplacement de l'objectif (4) raccordé au raccord d'objectif par un autre objectif (14, 24), **caractérisé en ce que**
- l'adaptation des moyens de formation de faisceaux (7) à l'autre objectif (14, 24) comprend une adaptation d'une formation, effectuée avec les moyens de formation de faisceaux (7), de fronts d'ondes du faisceau lumineux empêchant la fluorescence (3).

9. Procédé selon la revendication 8, **caractérisé en ce que** l'adaptation de la formation des fronts d'ondes du faisceau lumineux empêchant la fluorescence (3) comprend une adaptation d'un contrôle d'au moins un modulateur « spatial light » ou d'un miroir adaptatif à l'autre objectif (14, 24).

10. Microscope à balayage laser à haute résolution (1) avec :
- un raccord d'objectif,
- des moyens de formation de faisceaux (7) qui sont conçus pour former un faisceau lumineux empêchant la fluorescence (3) orienté vers une ouverture arrière d'un objectif (4, 14, 24) raccordé au raccord d'objectif, au moins en ce qui concerne sa polarisation, afin de former, dans le foyer (8) de l'objectif (1, 14, 24), un minimum d'intensité limité par des maxima d'intensité,
- dans lequel plusieurs éléments optiques (4, 5, 11, 12, 14, 24) comprenant l'objectif (4, 14, 24) sont disposés dans le trajet du faisceau lumineux empêchant la fluorescence (3) jusqu'au foyer (8) de l'objectif (4, 14, 24) et dans lequel les moyens de formation de faisceaux (7) sont différents des éléments optiques (4, 5, 11, 12, 14, 24), et
- un dispositif d'adaptation (13) pour les moyens de formation de faisceaux (7), qui est conçu pour compenser une variation des propriétés de modification de la polarisation d'un ensemble d'éléments optiques (4, 5, 11, 12, 14, 24) disposés dans le trajet du faisceau lumineux empêchant la fluorescence (3),
**caractérisé par**
- un dispositif de lecture et/ou un dispositif d'entrée (18) pour un identifiant d'un élément optique (4, 5, 11, 12, 14, 24) supprimé ou remplacé ou déplacé ou ajouté, dans lequel le dispositif d'adaptation (13) est conçu pour effectuer un réglage des moyens de formation de faisceaux (7) prédéterminé par l'identifiant, afin de compenser la variation, due à l'élément optique (4, 5, 11, 12, 14, 24) supprimé ou remplacé ou déplacé ou ajouté, des propriétés de modification de la polarisation de l'ensemble des éléments optiques (4, 5, 11, 12, 14, 24) disposés dans le trajet du faisceau lumineux empêchant la fluorescence (3).

11. Microscope à balayage laser à haute résolution (1) selon la revendication 10, **caractérisé en ce que** le dispositif de lecture est disposé sur le raccord d'objectif.

12. Microscope à balayage laser à haute résolution (1) selon l'une des revendications 10 et 11, **caractérisé en ce que** les moyens de formation de faisceaux (7) comprennent au moins deux éléments optiques biréfringents dont au moins un peut être réglé par le dispositif d'adaptation (13) de manière rotative et/ou basculante et/ou en ce qui concerne son retard de phase,
- dans lequel les éléments optiques biréfringents sont sélectionnés en options dans les groupes suivants :
- plaques de retardement, plaques de retardement λ/2 et λ/4,
- éléments à cristaux liquides (LCD) et polymères à cristaux liquides (LCP) et
- éléments électro-optiques (EO) et/ou
- dans lequel au moins un des éléments optiques biréfringents peut être tourné et/ou basculé par le dispositif d'adaptation (13), en option autour d'au moins axes spatiaux non parallèles ou orthogonaux et/ou
- dans lequel au moins un des éléments optiques biréfringents peut être tourné et/ou basculé et/ou réglé en ce qui concerne son retard de phase par le dispositif d'adaptation (13), en option à l'aide d'un moteur ou de manière électrique.

13. Microscope à balayage laser à haute résolution (1) selon l'une des revendications 10 à 12, **caractérisé en ce que** les moyens de formation de faisceaux (7) comprennent une substance optiquement active.

14. Microscope à balayage laser à haute résolution (1) selon l'une des revendications 10 à 13, **caractérisé en ce que** les moyens de formation de faisceaux (7) comprennent au moins un modulateur « spatial light » ou un miroir adaptatif pour la formation de fronts d'ondes du faisceau lumineux empêchant la fluorescence (3), que le dispositif d'adaptation (13) contrôle, afin d'adapter la formation des fronts d'ondes par un contrôle différent au niveau de l'ouverture arrière de l'objectif (4, 14, 24) correspondant.
